# EUROPÄISCHE PATENTSCHRIFT

(11) **EP 3 729 374 B1**
(45) Veröffentlichungstag und Bekanntmachung des Hinweises auf die Patenterteilung: **24.06.2026**
(21) Anmeldenummer: 18830455.4
(22) Anmeldetag: 18.12.2018
(51) Int. Cl.: G06T 7/33, G06T 3/00

(54) **VERFAHREN UND VORRICHTUNG ZUM BETREIBEN EINES KAMERA-MONITOR-SYSTEMS FÜR EIN KRAFTFAHRZEUG**
METHOD AND DEVICE FOR OPERATING A CAMERA-MONITOR SYSTEM FOR A MOTOR VEHICLE
PROCÉDÉ ET DISPOSITIF DE FONCTIONNEMENT D'UN SYSTÈME DE SURVEILLANCE À CAMÉRA POUR UN VÉHICULE À MOTEUR

(30) Priorität: 20.12.2017 DE 102017223473; 28.02.2018 DE 102018202998
(43) Veröffentlichungstag der Anmeldung: 28.10.2020
(73) Patentinhaber: AUMOVIO Germany GmbH, 60488 Frankfurt am Main (DE)
(72) Erfinder: WEINLICH, Andreas, 81737 München (DE)
(74) Vertreter: Aumovio Corporation
(86) Internationale Anmeldenummer: PCT/EP2018/085703
(87) Internationale Veröffentlichungsnummer: WO 2019/121821

(56) Entgegenhaltungen:
- US-A1- 2016 300 113
- US-A1- 2016 358 355
- "Advances in Visual Computing. ISVC 2008", vol. 5359, 2008, SPRINGER, BERLIN, HEIDELBERG, ISBN: 978-3-642-17318-9, article ELAN DUBROFSKY ET AL: "Combining Line and Point Correspondences for Homography Estimation", pages: 202 - 213, XP055296752, 032548, DOI: 10.1007/978-3-540-89646-3_20
- JIE HU ET AL: "Multi-objective content preserving warping for image stitching", 2015 IEEE INTERNATIONAL CONFERENCE ON MULTIMEDIA AND EXPO (ICME), IEEE, 29 June 2015 (2015-06-29), pages 1 - 6, XP033188448, DOI: 10.1109/ICME.2015.7177505
- JUNHONG GAO ET AL: "Constructing image panoramas using dual-homography warping", COMPUTER VISION AND PATTERN RECOGNITION (CVPR), 2011 IEEE CONFERENCE ON, IEEE, 20 June 2011 (2011-06-20), pages 49 - 56, XP032037935, ISBN: 978-1-4577-0394-2, DOI: 10.1109/CVPR.2011.5995433

## Beschreibung

Die Erfindung betrifft ein Verfahren zum Betreiben eines Kamera-Monitor-Systems für ein Kraftfahrzeug, insbesondere für einen Lastkraftwagen. Die Erfindung betrifft weiterhin eine Vorrichtung, die dazu ausgebildet ist, das Verfahren durchzuführen.

Kraftfahrzeuge, beispielsweise Lastkraftwagen und Busse, weisen herkömmlicherweise Außenspiegel auf. Es sind auch Spiegelersatzsysteme bekannt, bei denen mittels einer Kamera und eines Monitors die Sichtbereiche der üblichen Außenspiegel abgebildet werden.

US 2016/0300113 A1 betrifft ein Kamerasystem für ein Fahrzeug, das eine Vogelperspektive eines Bereichs um das Fahrzeug bereitstellt, und auf ein Verfahren zum Kalibrieren eines solchen 360°-Rundumsicht-Kamerasystems.

Es ist wünschenswert, ein Verfahren zum Betreiben eines Kamera-Monitor-Systems für ein Kraftfahrzeug anzugeben, das einen zuverlässigen Betrieb ermöglicht. Es ist weiterhin wünschenswert, eine Vorrichtung zum Betreiben eines Kamera-Monitor-Systems anzugeben, die einen verlässlichen Betrieb ermöglicht.

Die Erfindung zeichnet sich aus durch ein Verfahren gemäß Anspruch 1 zum Betreiben eines Kamera-Monitor-Systems für ein Kraftfahrzeug sowie durch eine korrespondierende Vorrichtung gemäß Anspruch 9, die ausgebildet ist, das Verfahren auszuführen. Weiterbildungen sind Gegenstand der abhängigen Ansprüche.

Das Kamera-Monitor-System weist zwei Kameras auf, die einer gemeinsamen Seite des Kraftfahrzeugs zugeordnet sind. Die Kameras sind jeweils dazu ausgebildet, ein Bild einer Umgebung des Kraftfahrzeugs bereitzustellen. Die abgebildete Umgebung der Bilder überlappt sich zumindest teilweise, insbesondere in einem Randbereich.

Transformationsparameter für ein Transformieren eines zweiten Bildes der zweiten Kamera werden ermittelt. Die Transformationsparameter werden so ermittelt, dass ein Bildelement in einem Randbereich eines transformierten zweiten Bildes an ein korrespondierendes Bildelement in einem Randbereich eines ersten Bildes der ersten Kamera anschließt. Weitere Transformationsparameter für das Transformieren des zweiten Bildes werden in Abhängigkeit von den ermittelten Transformationsparametern und in Abhängigkeit von einer bereitgestellten Vorgabe für das transformierte zweite Bild ermittelt. Das zweite Bild wird mit den weiteren Transformationsparametern zu dem transformierten zweiten Bild transformiert.

Das zweite Bild wird mit den weiteren Transformationsparametern transformiert, um mittels eines sogenannten Stitchings so an das erste Bild angefügt werden zu können, dass in den Randbereichen das Bildelement zusammenhängend dargestellt wird. Das erste Bild dient insbesondere als Referenzbild. Das zweite Bild wird transformiert, beispielsweise mittels Homographie, auch projektive Transformation genannt. Die Transformationsparameter werden so ermittelt beziehungsweise vorgegeben, dass die Bedingung erfüllt ist, dass das Bildelement in den Randbereichen der beiden Bilder nach der Transformation durchgehend aneinander angrenzen. Mittels der weiteren Transformationsparameter ist es möglich, weitere Bedingungen für das zweite transformierte Bild zu erfüllen. Somit ist das transformierte zweite Bild sowohl ohne unerwünschten Informationsverlust an das erste Bild anfügbar und die bereitgestellte Vorgabe ist erfüllbar.

Das zweite Bild wird nur einmal mit den weiteren Transformationsparametern transformiert. Die Transformationsparameter werden insbesondere nicht unmittelbar für ein Transformieren des zweiten Bildes verwendet. Die ermittelten Transformationsparameter werden zunächst in Abhängigkeit von der bereitgestellten Vorgabe zu den weiteren Transformationsparametern verändert. Somit ist nur eine einzige Transformation notwendig, um sowohl das gewünschte Anschließen in den Randbereichen als auch die bereitgestellte Vorgabe zu realisieren.

Mittels des Verfahrens ist es möglich, die Aufnahmen der zwei verschiedenen Kameras auf der gemeinsamen Seite so darzustellen, dass die dargestellte Umgebung von einem Nutzer intuitiv erfassbar ist. Obwohl das erste Bild von einer anderen Kamera aufgenommen wurde als das zweite Bild, schließen die beiden transformierten Bilder in ihren Randbereichen nahtlos aneinander an. Hierbei ist insbesondere auch die bereitgestellte Vorgabe erfüllt, die beispielsweise das Darstellen eines gesetzlich vorgeschriebenen Sichtfeldes umfasst.

Beispielsweise ist die erste Kamera eine Kamera mit einem geringen Sichtwinkel und einer hohen Brennweite, beispielsweise mit einer Telelinse. Beispielsweise ist die zweite Kamera eine Kamera mit geringer Brennweite und großem Sichtwinkel, beispielsweise mit einer Weitwinkellinse. Beispielsweise dient die erste Kamera dazu, die gesetzlichen Sichtfeldklassen 2 und 4 auf einem Monitor darzustellen. Beispielsweise dient die zweite Kamera dazu, die gesetzlichen Sichtfeldklassen 5 und teilweise 4 darzustellen. Insbesondere ist es mit dem Verfahren möglich, größere Bereiche der Umgebung anzuzeigen, als die gesetzlichen Sichtfeldklassen vorsehen. Somit ist es insbesondere möglich, in den Randbereichen, in denen die beiden Bilder aneinander angrenzen, im Bild sichtbare Kanten und/oder Linien stetig aneinander angrenzend darzustellen. Es ist möglich, nahezu den gesamten von den Kameras aufgenommenen Bildbereich im transformierten Bild darzustellen. Somit ist eine einfache Abdeckbarkeit der gesetzlichen Sichtfeldklassen ermöglicht. Insbesondere muss außer der Homographietransformation keine weitere Bildtransformation durchgeführt werden. Somit ist Rechenleistung eingespart. Parallel zum Fahrzeug liegende Linien, wie beispielsweise Seiten oder Mittelstreifen der Fahrbahn werden insbesondere ohne Knick dargestellt.

Gemäß zumindest einer Ausführungsform umfasst das Ermitteln der weiteren Transformationsparameter ein Ermitteln von drei Bildpunkten auf einer Geraden in dem ersten Bild. Drei korrespondierende Bildpunkte werden ausgehend von dem zweiten Bild mittels der Transformationsparameter ermittelt. Mit der Randbedingung, dass die drei Bildpunkte auf der Geraden liegen, ist es einfach möglich, die drei Bildpunkte zu ermitteln. Wenn zwei Bildpunkte ermittelt wurden, ist die Gerade definiert. Der dritte Bildpunkt muss dann auf dieser Geraden liegen. Insbesondere werden die drei Bildpunkte so ermittelt, dass die Gerade in dem Randbereich des ersten Bildes liegt. Somit ist ein einfaches Aneinanderfügen des ersten und des transformierten zweiten Bildes realisierbar.

Gemäß zumindest einer Ausführungsform werden die weiteren Transformationsparameter so ermittelt, dass die drei Bildpunkte in dem ersten Bild und die drei korrespondierenden Bildpunkte in dem transformierten zweiten Bild übereinstimmen. Die weiteren Transformationsparameter werden insbesondere so ermittelt, dass die drei Bildpunkte in dem ersten Bild und die drei korrespondierenden Bildpunkte in dem zweiten Bild nach der Transformation in das transformierte zweite Bild übereinstimmen. Die Koordinaten der Bildpunkte stimmen in dem ersten Bild und in dem transformierten zweiten Bild überein. Dadurch ist ein nahtloses Anschließen der beiden Bilder aneinander möglich.

Gemäß zumindest einer Ausführungsform werden zwei weitere Bildpunkte in dem zweiten Bild ermittelt. Einer der weiteren Bildpunkte wird zu einem vorgegebenen Punkt in dem transformierten zweiten Bild transformiert. Der andere der weiteren Bildpunkte wird auf eine vorgegebene Gerade transformiert in Abhängigkeit von der bereitgestellten Vorgabe. Beispielsweise verläuft die Gerade durch den vorgegebenen Punkt. Auch ein anderer Verlauf für die Gerade ist möglich. Insbesondere werden die weiteren Transformationsparameter so ermittelt, dass diese Transformation durchgeführt wird. Der andere der weiteren Bildpunkte ist somit nicht an einem frei wählbaren Punkt transformierbar, sondern auf die vorgegebene Gerade. Somit ist mittels der zwei weiteren Bildpunkte ein Ermitteln der weiteren Transformationsparameter möglich, um die bereitgestellte Vorgabe zu erfüllen.

Gemäß zumindest einer Ausführungsform werden für das Transformieren des zweiten Bildes acht Freiheitsgrade verwendet. Fünf der acht Freiheitsgrade werden mittels der Transformationsparameter festgelegt. Die drei anderen Freiheitsgrade der acht Freiheitsgrade werden mittels der weiteren Transformationsparameter festgelegt. Aufgrund der Ermittlung der drei Bildpunkte auf einer gemeinsamen Gerade und der zwei weiteren Bildpunkte auf einer anderen weiteren Geraden reichen acht Freiheitsgrade aus, um sowohl die bereitgestellte Vorgabe im zweiten transformierten Bild erfüllen zu können als auch ein nahtloses Anschließen der beiden Bilder im Randbereich realisieren zu können.

Erfindungsgemäss umfasst die bereitgestellte Vorgabe mindestens eines aus:
- Darstellen einer Bodenkante des Kraftfahrzeugs gerade,
- Darstellen von einer Linie gerade, die parallel zu der Bodenkante verläuft, und
- Darstellen eines vorgegebenen Ausschnitts aus der Umgebung. Insbesondere sind die Vorgaben im Betrieb veränderbar, beispielsweise durch einen Nutzer und/oder durch eine Fahrsituation. Beispielsweise wird die Vorgabe verändert, abhängig davon, ob das Kraftfahrzeug langsam fährt und einparkt oder schnell fährt, beispielsweise auf einer Autobahn.

Gemäß zumindest einer Ausführungsform umfasst mindestens ein Transformieren ein Homographietransformieren. Somit ist ein exaktes aneinander Anschließen der zusammenhängenden Bildkanten in den Randbereichen des ersten Bildes und des zweiten transformierten Bildes möglich. Aufgrund der weiteren Transformationsparameter ist es möglich, zu vermeiden, dass mittels Homographie das transformierte zweite Bild derart stark vergrößert wird, dass bei vorgegebener beschränkter Bildschirmgröße eine Anzeige des gesamten gesetzlich geforderten Sichtfeldes nicht mehr möglich ist.

Die zweiten Transformationsparameter ermöglichen das exakte aneinander Anschließen der beiden Bilder und dabei die Anzeige insbesondere im transformierten zweiten Bild des gesamten gesetzlich geforderten Sichtfeldes. Zudem ist ein stark verzerrtes Bild mit unzureichenden Bildinformationen vermeidbar. Die lediglich einmalig durchgeführte Homographietransformation an dem zweiten Bild ermöglicht eine zuverlässige und dabei ausreichend schnelle Transformation. Gemäß zumindest einem Ausführungsbeispiel ist das erste Bild ein transformiertes Bild eines AusgangsBildes der ersten Kamera. Gemäß weiteren Ausführungsbeispielen wird das Ausgangsbild der ersten Kamera direkt verwendet.

Gemäß zumindest einer Ausführungsform werden das erste Bild und das transformierte zweite Bild als Gesamtbild auf einem gemeinsamen Monitor des Kamera-Monitor-Systems dargestellt. Beispielsweise wird das erste Bild als oberes Bild des GesamtBildes dargestellt. Das zweite transformierte Bild wird als unteres Bild des GesamtBildes dargestellt. Das Verfahren ermöglicht, dass das Gesamtbild intuitiv von einem Nutzer erfasst werden kann, obwohl das erste transformierte Bild auf einer anderen Kamera basiert als das zweite transformierte Bild. Dabei ist zudem die Vorgabe für das transformierte zweite Bild erfüllt.

Die Vorrichtung für das Kraftfahrzeug, die ausgebildet ist, das Verfahren gemäß zumindest einer Ausführungsform auszuführen, ist beispielsweise Teil eines Steuergerätes für das Kraftfahrzeug (englisch: ECU, electronic control unit).

Vorteile, Merkmale und Weiterbildungen, die für das Verfahren beschrieben sind, gelten auch für die Vorrichtung und umgekehrt.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung eines Kraftfahrzeugs mit einem Kamera-Monitor-System gemäß einem Ausführungsbeispiel,
Figur 2 eine schematische Darstellung eines Bildes einer ersten Kamera gemäß einem Ausführungsbeispiel,
Figur 3 eine schematische Darstellung eines Bildes einer zweiten Kamera gemäß einem Ausführungsbeispiel,
Figur 4 eine schematische Darstellung eines Gesamtbildes gemäß einem Ausführungsbeispiel,
Figur 5 eine schematische Darstellung eines Gesamtbildes gemäß einem Ausführungsbeispiel, und
Figur 6 ein Ablaufdiagramm eines Verfahrens gemäß einem Ausführungsbeispiel.

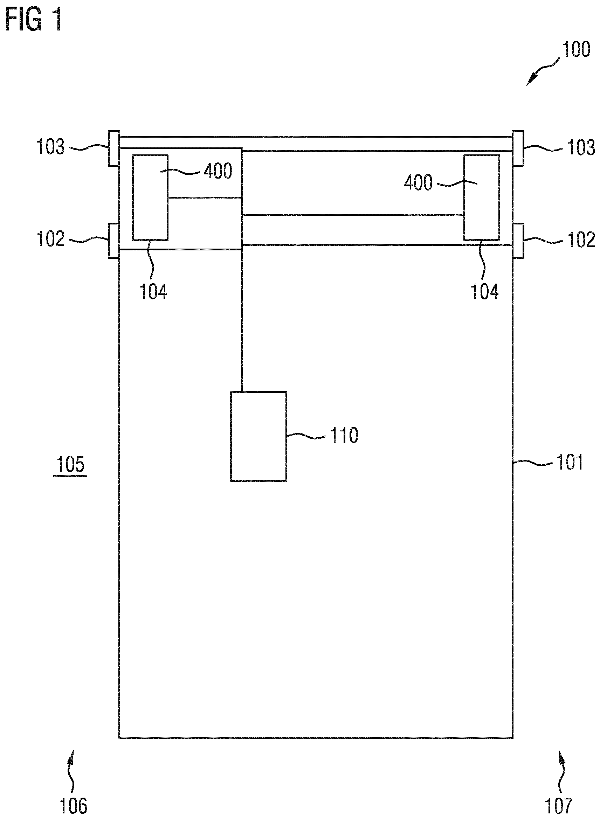

Figur 1 zeigt eine schematische Darstellung eines Kraftfahrzeugs 101 von oben gemäß einem Ausführungsbeispiel. Das Kraftfahrzeug 101 ist beispielsweise ein Lastkraftwagen mit einem Anhänger, ein Bus und/oder ein Personenkraftwagen.

Das Kraftfahrzeug 101 weist ein Kamera-Monitor-System 100 als Spiegelersatzsystem auf. Das Kamera-Monitor-System 100 weist je Seite 106, 107 des Kraftfahrzeugs 101 zwei Kameras 102, 103 auf. Die Kameras 102, 103 dienen dazu, eine Umgebung 105 der jeweiligen zugeordneten Seite 106, 107 aufzunehmen.

Gemäß weiteren Ausführungsbeispielen sind lediglich an einer Seite der Seiten 106, 107 die beiden Kameras 102, 103 angeordnet.

Das Kamera-Monitor-System 100 weist zwei Monitore 104 auf, die jeweils einer der Seiten 106, 107 zugeordnet sind. Im Betrieb wird ein Ausschnitt der Umgebung 105 auf der Seite 106, der von den dort angeordneten Kameras 102, 103 aufgezeichnet wird, auf dem zugeordneten Monitor 104 als Gesamtbild 400 dargestellt. Auf dem Monitor 104, der der Seite 107 zugeordnet ist, wird ein Ausschnitt aus der Umgebung 105 als Gesamtbild 400 dargestellt, das mittels der Kameras 102, 103 aufgezeichnet wird, die der Seite 107 zugeordnet sind. Somit unterscheidet sich das Gesamtbild 400 auf den beiden Monitoren 104.

Das Gesamtbild 400 auf dem Monitor 104 ist insbesondere dazu eingerichtet, ein Spiegelbild eines herkömmlichen Außenspiegels darzustellen und insbesondere weitere Ausschnitte aus der Umgebung 105 darzustellen, die mit einem herkömmlichen Außenspiegel nicht abbildbar sind.

Eine Vorrichtung 110 ist vorgesehen, mit der die Kameras 102, 103 und die Monitore 104 signaltechnisch gekoppelt sind. Die Vorrichtung 110 ist eingerichtet, sowohl die Kameras 102, 103 als auch die Monitore 104 zu steuern. Beispielsweise ist die Vorrichtung 110 eines Steuergerätes oder ein Teil eines Steuergerätes des Kraftfahrzeugs 101.

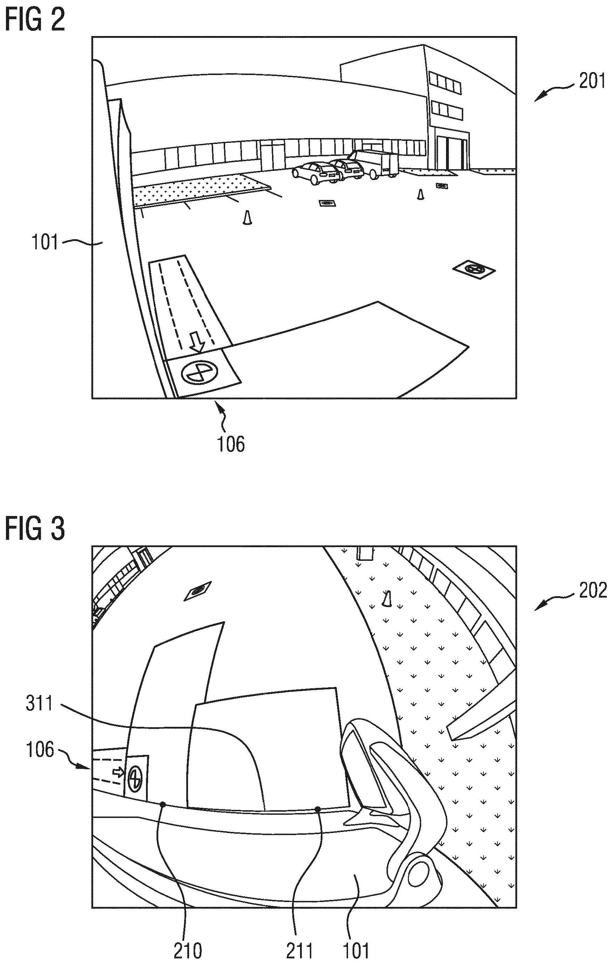

Figur 2 zeigt ein erstes Bild 201, das beispielsweise auf der Seite 106 mittels der ersten Kamera 102 aufgezeichnet ist. Die Kamera 102 nimmt einen Ausschnitt der Umgebung 105 nach hinten auf.

Figur 3 zeigt ein zweites Bild 202, das beispielsweise auf der Seite 106 mittels der zweiten Kamera 103 aufgezeichnet ist. Das zweite Bild 202 zeigt einen zum ersten Bild 201 unterschiedlichen Ausschnitt aus der Umgebung 105. Die dargestellten Bereiche der Umgebung 105 überlappen sich jedoch zumindest teilweise.

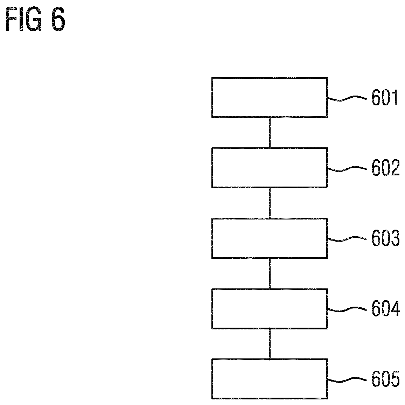

Die dargestellten Bilder 201, 202 der Figuren 2 und 3 sind noch nicht linsenentzerrt. Insbesondere wird zunächst eine Linsenentzerrung durchgeführt, bevor nachfolgend das Verfahren gemäß Figur 6 durchgeführt wird. Insbesondere werden die linsenentzerrten Bilder der beiden Kameras 102, 103 mittels Homographietransformation aneinander angeschlossen. Die Bilder 2010, 202 werden zuerst linsenentzerrt und danach können die Schritte des beschriebenen Verfahrens angewandt werden.

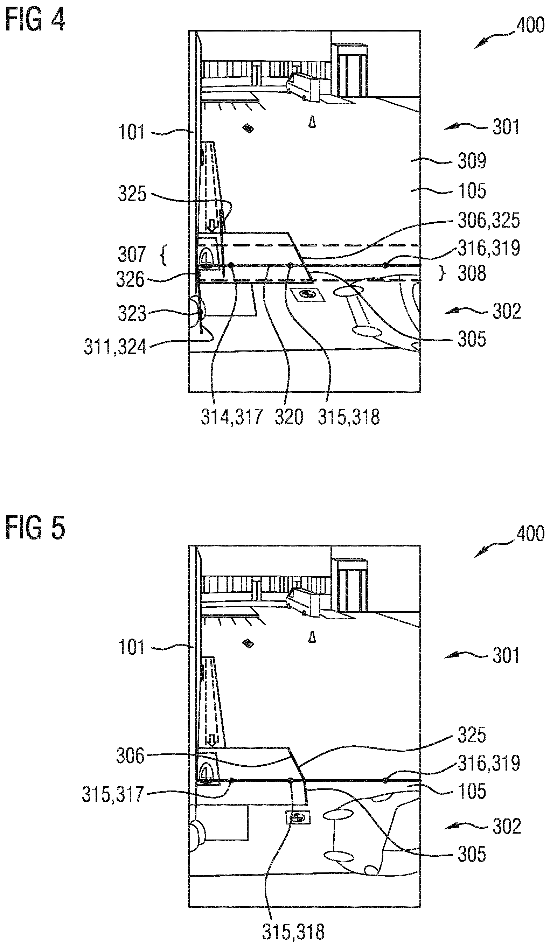

Nach der Durchführung des nachfolgend im Zusammenhang mit Figur 6 beschriebenen Verfahrens wird das Gesamtbild 400, das auf den beiden Bildern 201, 202 basiert, auf dem Monitor 104 dargestellt, wie in Figur 4 und Figur 5 jeweils beispielhaft gezeigt.

Im Gesamtbild 400 der Figuren 4 und 5 ist im oberen Bereich ein transformiertes erstes Bild 301 dargestellt und nicht das erste Bild 201, wie es die erste Kamera 102 aufzeichnet. Das erste Bild 201 ist transformiert, beispielsweise mittels Homographie, sodass Vorgaben für das transformierte erste Bild 301 realisiert sind. Beispielsweise soll der Horizont horizontal dargestellt werden und/oder eine Hinterkante des Kraftfahrzeugs 101 vertikal. Das transformierte erste Bild 301 dient in diesem Ausführungsbeispiel als Referenzbild für die Transformation des zweiten Bildes 202.

Das erste Bild 201, 301 wird im Gesamtbild 400 beispielsweise oben dargestellt. Ein transformiertes zweites Bild 302 wird im Gesamtbild 400 beispielsweise unten dargestellt. Das transformierte zweite Bild 302 wird mittels Transformieren des zweiten Bildes 202 erzeugt, wie nachfolgend beispielsweise erläutert wird.

Das Verfahren beginnt gemäß dem Ausführungsbeispiel der Figur 6 mit Schritt 601. Im Schritt 601 werden beispielsweise acht Homographieparameter bestimmt, um das zu verzerrende zweite Bild 202 an das nicht zu transformierende erste Bild 201 nahtlos anfügen zu können. Das erste Bild 201 dient insbesondere als Referenzbild. Das erste Bild 201 wird in den Verfahrensschritten gemäß dem Ausführungsbeispiel der Figur 6 nicht transformiert. Es ist jedoch möglich, dass das Bild 201 ein bereits transformiertes Bild ist, beispielsweise ist das erste Bild 201 mittels Linsenentzerrung und Homographie aus einem Bild der ersten Kamera 102 entstanden.

Im Schritt 602 werden im ersten Bild 201 drei Bildpunkte 314, 315, 316 (Figuren 4 und 5) möglichst weit voneinander ausgewählt. Insbesondere liegen die drei Bildpunkte 314, 315, 316 in einem Randbereich 307 des ersten Bildes 201, 301. Der Randbereich 307 ist der Bereich, der im Gesamtbild 400 an das zweite Bild angrenzt.

Im Schritt 603 werden mit Hilfe der Homographieparameter aus Schritt 601 die Koordinaten von korrespondierenden Bildpunkten 317, 318, 319 ausgehend von dem zweiten Bild 202 ermittelt. Die korrespondierenden Bildpunkte 317, 318, 319 korrespondieren mit den Bildpunkten 314, 315, 316. Die korrespondierenden Bildpunkte 317, 318, 319 sind insbesondere in einem Randbereich 308 des zweiten Bildes 202. Hierfür werden die Homographieparameter verwendet. Im Schritt 603 wird insbesondere noch keine Transformation durchgeführt.

Die Bildpunkte 314, 315, 316 liegen im ersten Bild 201, 301 und damit im Gesamtbild 400. Dies ist beispielsweise äquivalent, wenn das erste Bild nicht transformiert ist. Da nach der Transformation das zweite Bild 302 an das erste Bild 301 direkt angrenzt, liegen diese Punkte 314, 315, 316 auch gleichzeitig im transformierten zweiten Bild 302. Durch die Homographieparameter werden nun die Punkte 317, 318, 319 bestimmt, die im originalen, insbesondere untransformierten zweiten Bild 202 liegen. Diese Punkte 317, 318, 319 sind insbesondere nicht im Gesamtbild zu finden.

Im Schritt 604 werden acht neue Homographieparameter bestimmt, um zumindest eine weitere Vorgabe für das zweite transformierte Bild 302 zu realisieren. Die weiteren Homographieparameter basieren auf den Homographieparametern aus Schritt 601, sodass die korrespondierenden Bildpunkte des transformierten zweiten Bildes 302 exakt auf den Bildpunkten 314, 315, 316 des ersten Bildes 201 zu liegen kommen. Hierfür werden von den acht zur Verfügung stehenden Homographieparametern fünf Freiheitsgrade verwendet. Die drei Bildpunkte 314, 315, 316 und die korrespondierenden, transformierten Bildpunkte liegen auf einer Gerade 320. Je Bildpunkt 314 bis 316 werden eine X- und eine Y-Koordinate fixiert. Hiervon ist jedoch ein Freiheitsgrad zu subtrahieren, da der dritte Punkt ohnehin auf der Gerade 320 mit den beiden anderen Punkten liegt. Bei der Homographietransformation werden Geraden in jedem Fall auf anderen Geraden abgebildet. Somit reichen fünf Freiheitsgrade aus.

Um die Vorgabe an dem Bildinhalt für das transformierte zweite Bild 302 zu realisieren, stehen somit noch drei Freiheitsgrade zur Verfügung. Beispielsweise werden manuell oder automatisch zwei weitere Bildpunkte 210, 211 (Figur 3) im zweiten Bild 202 ausgewählt. Beispielsweise werden die weiteren Bildpunkte 210, 211 an einer Bodenkante 311 des Kraftfahrzeugs 101 ausgewählt.

Der weitere Bildpunkt 211 wird beispielsweise auf einem vorgegebenen Punkt 323 transformiert (Figur 4). Dies kann durch manuelle Annotation oder automatisch mittels Kalibrierpunkten an definierten Stellen erfolgen. Beispielsweise werden manuell die beiden weiteren Bildpunkte 210, 211 im zweiten Bild 202 ausgewählt und nachfolgend im Gesamtbild 400 der vorgegebene Punkt 323 sowie der korrespondierende weitere Bildpunkt 326 manuell ausgewählt.

Alternativ oder zusätzlich werden beispielsweise zwei Kalibrierpunkte an definierten Stellen im Raum positioniert, die dann an die definierten Stellen im transformierten zweiten Bild 302 transformiert werden.

Der vorgegebene Punkt 323 und der korrespondierende weitere Bildpunkt 326 liegen beispielsweise auf einer gemeinsamen Geraden 324, beispielsweise der Bodenkante 311 des Kraftfahrzeugs 101. Der erste der weiteren Bildpunkte 211 ist frei transformierbar auf den vorgegebenen Punkt 323. Der zweite der weiteren Bildpunkte 210 ist insbesondere nicht an einem frei wählbaren Punkt transformierbar. Der weitere Bildpunkt 210 wird auf den nicht frei zu bestimmenden korrespondierenden weiteren Bildpunkt 326 auf der Gerade 324 transformiert. Alternativ ist es auch möglich, eine Linie im Sichtfeld, beispielsweise auf einem Kalibriermuster, auf einem frei zu bestimmenden Punkt im transformierten zweiten Bild 302 abzubilden. Somit reichen drei Freiheitsgrade aus, um die zwei weiteren Bildpunkte 210, 211 beziehungsweise einen einzigen weiteren Bildpunkt 201 sowie zusätzlich eine Linie mittels Homographie zu transformieren.

Im Schritt 605 werden dann die neuen Homographieparameter aus Schritt 604 auf das zweite Bild 202 angewandt und somit das transformierte zweite Bild 302 erzeugt.

Das erste Bild 201 wird im Gesamtbild 400 beispielsweise oben dargestellt. Das transformierte zweite Bild 302 wird im Gesamtbild 400 beispielsweise unten dargestellt. Aufgrund des Verfahrens ist es möglich, zum einen die beiden Randbereiche 307 und 308 nahtlos ineinander übergehen zu lassen und zum anderen mindestens eine Vorgabe für das transformierte zweite Bild 302 zu erfüllen.

Die Vorgabe für das transformierte zweite Bild 302 beinhaltet beispielsweise, dass die seitliche Außenkante, also beispielsweise die Bodenkante 311, des Zugfahrzeugs des Kraftfahrzeugs 101 an einer Bodenebene 309 eine nicht geknickte Linie darstellt, also gerade abgebildet wird. Alternativ oder zusätzlich beinhaltet die Vorgabe, dass Linien, beispielsweise die Linie 325, auf der Bodenebene 309 parallel zur Bodenkante 311 angezeigt werden und nicht geknickt. Alternativ oder zusätzlich beinhaltet die Vorgabe, dass ein gesetzlich vorgeschriebener oder ein darüber hinausgehender Ausschnitt der Umgebung 105 an der Bodenebene 309 vollständig im Gesamtbild 400 angezeigt wird.

Zur Erzeugung des transformierten zweiten Bildes 302 werden zunächst wie beim konventionellen Stitching für das untere Bild 302 Homographieparameter erzeugt, um das transformierte zweite Bild 302 nahtlos an das obere Bild 301 anzufügen.

Beispielsweise werden im oberen Bild 301 der linke untere Eckpunkt, der rechte untere Eckpunkt und der Punkt in der Mitte zwischen diesen beiden Eckpunkten ausgewählt. Diese entsprechen den drei Bildpunkten 314, 315, 316.

Durch jeweilige Multiplikation der Homographiematrix von links mit diesen Bildpunkten 314, 315, 316 werden die Koordinaten der korrespondierenden Bildpunkte für das noch unverzerrte zweite Bild 202 bestimmt, das später im Gesamtbild 400 im unteren Bereich angezeigt werden soll.

Die weiteren Homographieparameter werden durch Lösung eines Gleichungssystems mit acht Gleichungen und acht Unbekannten bestimmt, sodass die drei korrespondierenden Bildpunkte 317, 318, 319 des noch untransformierten zweiten Bildes 202 nach der Transformation zum transformierten zweiten Bild 302 an die drei Bildpunkte 314, 315, 316 des oberen Bildes 301 angrenzen. Die weiteren Homographieparameter werden beispielsweise so bestimmt, dass der vordere, linke Eckpunkt 211 des Zugfahrzeugs des Kraftfahrzeugs 101 (vom Fahrer aus gesehen) an den definierten Punkt 323 im unteren Bildbereich transformiert wird. Hierfür werden zwei Freiheitsgrade benötigt. Der vorgegebene Punkt 323 ist so vorgegeben, dass er einerseits die Linie 324 mit der im oberen Bildbereich zu sehenden Bodenkante 311 des Zugfahrzeugs bildet und andererseits sichergestellt ist, dass im unteren Bildbereich nach unten hin noch möglichst viel Bildinformation des KameraeingangsBildes 202 dargestellt wird. Insbesondere werden jedoch keine außerhalb des Kameraeingangsbildes 202 liegenden Bereiche sichtbar, die schwarz dargestellt würden. In Figur 4 ist die Vorgabe für das transformierte zweite Bild 302 beispielsweise, dass die Linien 325, die parallel zur Bodenkante 311 verlaufen, als ungeknickte Linien erhalten bleiben, auch wenn sie teilweise im oberen Bild 301 und teilweise im unteren Bild 302 dargestellt werden. Hierfür wird beispielsweise auf einer Linie, die in beiden Bildern sichtbar ist, ein Punkt des zweiten Bildes 202 auf einem beliebigen Punkt auf der Linie im oberen Bild 301 abgebildet. Hierfür wird ein Freiheitsgrad benötigt.

Die daraus ermittelten weiteren Homographieparameter werden auf das zweite Kameraeingangsbild 202 angewandt und das Resultat im unteren Bildbereich des GesamtBildes 400 dargestellt.

Figur 5 zeigt ein weiteres Ausführungsbeispiel, bei dem die Vorgabe für das transformierte zweite Bild 302 im Vergleich zum Ausführungsbeispiel der Figur 4 verändert wurde. Anstatt der Anforderung, wie in Figur 4, dass parallele Linien nicht geknickt dargestellt werden sollen, ist die Vorgabe im Ausführungsbeispiel der Figur 5, dass nach rechts außen möglichst viel Bildinformation sichtbar sein soll. Entsprechend ist die Linie 325 im Übergangsbereich vom oberen Bild 301 zum unteren Bild 302 geknickt. Dafür ist im unteren Bildbereich ein größerer Ausschnitt der Umgebung 105 dargestellt.

Unabhängig von der Vorgabe für das transformierte zweite Bild 302 werden ein Bildelement 305 des zweiten transformierten Bildes 302 und ein korrespondierendes Bildelement 306 des ersten Bildes 301 nahtlos aneinander angrenzend dargestellt. Im Gesamtbild 400 sind somit exakt aneinander anschließende Bildkanten und Linien zwischen allen im Monitor 104 dargestellten Kamerabildern 301, 302 realisiert und dabei eine Anzeige eines der vorgegebenen Kriterien und Vorgaben entsprechenden Ausschnitts und eine den vorgegebenen Kriterien und Vorgaben entsprechenden Verzerrung des zweiten KameraBildes 202 möglich.

Zur automatischen Ermittlung der weiteren Homographieparameter ist es möglich, die Kameras 102, 103 an vorläufige Kalibrierhalterungen zu befestigen. Die Kameras 102, 103 nehmen zwei Kalibrierpunkte auf, die in einer relativ zur Kameraposition entsprechenden Bodenebene nach dem späteren Einbau liegenden Ebene liegen. Nachfolgend wird der eine dieser Kalibrierpunkte auf einen festgelegten Punkt im unteren Bereich des Bildes abgebildet. Der andere dieser Kalibrierpunkte wird auf einen beliebigen Punkt einer festgelegten Gerade im unteren Bereich des Bildes abgebildet.

Zur Erzeugung des transformierten zweiten Bildes 302 muss das zweite Bild 202 insbesondere nur ein einziges Mal transformiert werden. Somit ist eine zuverlässige und ausreichend schnelle Transformation möglich.

## Patentansprüche

1. Verfahren zum Betreiben eines Kamera-Monitor-Systems (100) für ein Kraftfahrzeug (101), bei dem das Kamera-Monitor-System (100) zwei Kameras (102, 103) aufweist, die einer gemeinsamen Seite (106, 107) des Kraftfahrzeugs zugeordnet sind und die jeweils dazu ausgebildet sind, ein Bild (201, 202) einer Umgebung (105) des Kraftfahrzeugs (101) bereit zu stellen, wobei ein erstes Bild (201) mittels einer ersten Kamera (102) und ein zweites Bild (202) mittels einer zweiten Kamera (103) aufgezeichnet ist und wobei die abgebildete Umgebung (105) der Bilder (201, 202) teilweise überlappt, umfassend:
- Ermitteln von Transformationsparametern für ein Transformieren des zweiten Bildes (202) der zweiten Kamera (103), sodass ein Bildelement (305) in einem Randbereich (308) eines transformierten zweiten Bildes (302) an ein korrespondierendes Bildelement (306) in einem Randbereich (307) des ersten Bildes (301) der ersten Kamera (102) anschließt, wobei die Transformationsparameter nicht unmittelbar für ein Transformieren des zweiten Bildes (202) verwendet werden,
- Ermitteln von weiteren Transformationsparametern für das Transformieren des zweiten Bildes (202) in Abhängigkeit von den ermittelten Transformationsparametern und in Abhängigkeit von einer bereitgestellten Vorgabe für das transformierte zweite Bild (302), wobei die ermittelten Transformationsparameter in Abhängigkeit von der bereitgestellten Vorgabe zu den weiteren Transformationsparametern verändert werden,
- Transformieren des zweiten Bildes (202) mit den weiteren Transformationsparametern zu dem transformierten zweiten Bild (302), wobei das zweite Bild (202) zur Erzeugung des transformierten zweiten Bilds (302) nur einmal transformiert wird, wobei die bereitgestellte Vorgabe mindestens eines umfasst aus:
- Darstellen einer Bodenkante (311) des Kraftfahrzeugs (101) gerade,
- Darstellen von einer Linie (325) gerade, die parallel zu einer Bodenkante des Kraftfahrzeugs (311) verläuft, und
- Darstellen eines vorgegebenen Ausschnitts aus der Umgebung (105).

2. Verfahren nach Anspruch 1, bei dem das Ermitteln der weiteren Transformationsparameter umfasst:
- Ermitteln von drei Bildpunkten (314, 315, 316) auf einer Geraden (320) in dem ersten Bild (301),
- Ermitteln von drei korrespondierenden Bildpunkten (317, 318, 319) ausgehend von dem zweiten Bild (202) mittels der Transformationsparameter, wobei die korrespondierenden Bildpunkte (317, 318, 319) im zweiten Bild (202) liegen.

3. Verfahren nach Anspruch 2, bei dem die Gerade (320) in dem Randbereich (307) des ersten Bildes (301) liegt.

4. Verfahren nach Anspruch 2 oder 3, bei dem die weiteren Transformationsparameter so ermittelt werden, dass die drei Bildpunkte (314, 315, 316) in dem ersten Bild (301) und die drei korrespondierenden Bildpunkte (317, 318, 319) übereinstimmen.

5. Verfahren nach einem der Ansprüche 1 bis 4, umfassend:
- Ermitteln von zwei weiteren Bildpunkten (210, 211) in dem zweiten Bild (202),
- Transformieren eines der weiteren Bildpunkte (210, 211) zu einem vorgegebenen Punkt (323) in dem transformierten zweiten Bild (302),
- Transformieren des anderen der weiteren Bildpunkte (210, 211) auf eine vorgegebene Gerade (324) in Abhängigkeit von der bereitgestellten Vorgabe.

6. Verfahren nach einem der Ansprüche 1 bis 5, bei dem für das Transformieren des zweiten Bildes (202) acht Freiheitsgrade verwendet werden, wovon fünf Freiheitsgrade mittels der Transformationsparameter festgelegt werden und drei andere Freiheitsgrade mittels der weiteren Transformationsparameter festgelegt werden.

7. Verfahren nach einem der Ansprüche 1 bis 5, bei dem mindestens ein Transformieren ein Homographietransformieren umfasst.

8. Verfahren nach einem der Ansprüche 1 bis 7, umfassend:
- Darstellen des ersten Bildes (301) und des transformierten zweiten Bildes (302) als Gesamtbild (400) auf einem gemeinsamen Monitor (104) des Kamera-Monitor-Systems (100).

9. Vorrichtung für ein Kraftfahrzeug, die ausgebildet ist, ein Verfahren nach einem der Ansprüche 1 bis 8 auszuführen.

## Claims

1. A method for operating a camera-monitor system (100) for a motor vehicle (101), in which the camera-monitor system (100) has two cameras (102, 103) which are assigned to a common side (106, 107) of the motor vehicle and are configured in each case to provide an image (201, 202) of an environment (105) of the motor vehicle (101), wherein a first image (201) is recorded by means of a first camera (102) and a second image (202) is recorded by means of a second camera (103) and wherein the depicted environment (105) of the images (201, 202) partially overlaps, comprising:
- determining transformation parameters for transforming a second image (202) of the second camera (103) such that an image element (305) in a peripheral region (308) of a transformed second image (302) continues from a corresponding image element (306) in a peripheral region (307) of a first image (301) of the first camera (102), wherein the transformation parameters are not directly used for transforming a second image (202),
- determining further transformation parameters for transforming the second image (202) as a function of the determined transformation parameters and as a function of a specification provided for the transformed second image (302), wherein the determined transformation parameters are changed into the further transformation parameters as a function of the specification provided,
- transforming the second image (202) into the transformed second image (302) with the further transformation parameters, wherein the second image (202) is transformed only once in order to generate the transformed second image (302), wherein the specification provided comprises at least one of:
- representing a bottom edge (311) of the motor vehicle (101) as straight,
- representing a line (325) as straight, which runs parallel to a bottom edge (311) of the motor vehicle, and
- representing a specified section from the environment (105).

2. The method as claimed in claim 1, in which determining the further transformation parameters comprises:
- determining three image points (314, 315, 316) on a straight line (320) in the first image (301),
- determining three corresponding image points (317, 318, 319) based on the second image (202) by means of the transformation parameters, wherein the corresponding image points (317, 318, 319) are located in the second image (202).

3. The method as claimed in claim 2, in which the straight line (320) is located in the peripheral region (307) of the first image (301).

4. The method as claimed in claim 2 or 3, in which the further transformation parameters are determined such that the three image points (314, 315, 316) in the first image (301) and the three corresponding image points (317, 318, 319) coincide.

5. The method as claimed in any one of claims 1 to 4, comprising:
- determining two further image points (210, 211) in the second image (202),
- transforming one of the further image points (210, 211) into a specified point (323) in the transformed second image (302),
- transforming the other of the further image points (210, 211) into a specified straight line (324) depending on the specification provided.

6. The method as claimed in any one of claims 1 to 5, in which eight degrees of freedom are used for transforming the second image (202), five degrees of freedom of which are defined by means of the transformation parameters and three other degrees of freedom are defined by means of the further transformation parameters.

7. The method as claimed in any one of claims 1 to 5, in which at least one transformation comprises a homography transformation.

8. The method as claimed in any one of claims 1 to 7, comprising:
- representing the first image (301) and the transformed second image (302) as an overall image (400) on a common monitor (104) of the camera-monitor system (100).

9. A device for a motor vehicle configured to carry out a method as claimed in any one of claims 1 to 8.

## Revendications

1. Procédé de fonctionnement d'un système de surveillance à caméra (100) pour un véhicule à moteur (101), dans lequel le système de surveillance à caméra (100) présente deux caméras (102, 103) qui sont associées à un côté commun (106, 107) du véhicule à moteur et qui sont chacune conçues pour fournir une image (201, 202) d'un environnement (105) du véhicule à moteur (101), dans lequel une première image (201) est enregistrée au moyen d'une première caméra (102) et une seconde image (202) est enregistrée au moyen d'une seconde caméra (103), et dans lequel l'environnement (105) représenté des images (201, 202) se recouvre partiellement, comprenant :
- la détermination de paramètres de transformation pour une transformation de la seconde image (202) de la seconde caméra (103), de sorte qu'un élément d'image (305) dans une zone de bord (308) d'une seconde image transformée (302) soit raccordé à un élément d'image correspondant (306) dans une zone de bord (307) de la première image (301) de la première caméra (102), dans lequel les paramètres de transformation ne sont pas utilisés directement pour une transformation de la seconde image (202),
- la détermination de paramètres de transformation supplémentaires pour la transformation de la seconde image (202) en fonction des paramètres de transformation déterminés et en fonction d'une consigne fournie pour la seconde image transformée (302), dans lequel les paramètres de transformation déterminés sont modifiés en fonction de la consigne fournie pour obtenir les paramètres de transformation supplémentaires,
- la transformation de la seconde image (202) au moyen des paramètres de transformation supplémentaires pour obtenir la seconde image transformée (302), dans lequel la seconde image (202) n'est transformée qu'une seule fois pour la génération de la seconde image transformée (302), dans lequel la consigne fournie comprend au moins l'une :
- de la représentation rectiligne d'un bord au sol (311) du véhicule à moteur (101),
- de la représentation rectiligne d'une ligne (325) s'étendant parallèlement à un bord au sol (311) du véhicule à moteur, et
- de la représentation d'un extrait prédéfini de l'environnement (105).

2. Procédé selon la revendication 1, dans lequel la détermination des paramètres de transformation supplémentaires comprend :
- la détermination de trois points d'image (314, 315, 316) sur une droite (320) dans la première image (301),
- la détermination de trois points d'image correspondants (317, 318, 319) à partir de la seconde image (202) au moyen des paramètres de transformation, dans lequel les points d'image correspondants (317, 318, 319) sont situés dans la seconde image (202).

3. Procédé selon la revendication 2, dans lequel la droite (320) est située dans la zone de bord (307) de la première image (301).

4. Procédé selon la revendication 2 ou 3, dans lequel les paramètres de transformation supplémentaires sont déterminés de telle sorte que les trois points d'image (314, 315, 316) dans la première image (301) et les trois points d'image correspondants (317, 318, 319) coïncident.

5. Procédé selon l'une quelconque des revendications 1 à 4, comprenant :
- la détermination de deux points d'image supplémentaires (210, 211) dans la seconde image (202),
- la transformation de l'un des points d'image supplémentaires (210, 211) vers un point prédéfini (323) dans la seconde image transformée (302),
- la transformation de l'autre des points d'image supplémentaires (210, 211) sur une droite prédéfinie (324) en fonction de la consigne fournie.

6. Procédé selon l'une quelconque des revendications 1 à 5, dans lequel huit degrés de liberté sont utilisés pour la transformation de la seconde image (202), cinq degrés de liberté étant définis au moyen des paramètres de transformation et trois autres degrés de liberté étant définis au moyen des paramètres de transformation supplémentaires.

7. Procédé selon l'une quelconque des revendications 1 à 5, dans lequel au moins une transformation comprend une transformation par homographie.

8. Procédé selon l'une quelconque des revendications 1 à 7, comprenant :
- la représentation de la première image (301) et de la seconde image transformée (302) sous forme d'image globale (400) sur un moniteur commun (104) du système de surveillance à caméra (100).

9. Dispositif pour un véhicule à moteur, conçu pour mettre en œuvre un procédé selon l'une quelconque des revendications 1 à 8.
